## Europäisches Patentamt
## European Patent Office
## Office européen des brevets

(19)

(11) Publication number: **0 009 059**
**B1**

(12)

# EUROPEAN PATENT SPECIFICATION

(45) Date of publication of patent specification: **01.12.82**

(51) Int. Cl.³: **B 01 D 17/02, C 02 F 1/40**

(21) Application number: **78200209.1**

(22) Date of filing: **25.09.78**

(54) **A coalescing device.**

(43) Date of publication of application:
**02.04.80 Bulletin 80/7**

(45) Publication of the grant of the patent:
**01.12.82 Bulletin 82/48**

(84) Designated Contracting States:
**BE CH DE FR GB LU NL SE**

(56) References cited:
FR - A - 2 375 890
FR - A - 2 380 054
GB - A - 1 445 692
US - A - 2 742 156
US - A - 3 738 492
US - A - 3 852 193

SCHIP en WERF, 31, November 1964,
Rotterdam,
"Het nieuwe C.A.V. filter-water-afscheidings-
systeem", pages 699—700.

(73) Proprietor: **Ballast-Nedam Groep N.V.**
**Laan van Kronenburg 2**
**NL-1180 BE Amstelveen (NL)**
(73) Proprietor: **Skimovex B.V.**
**Industriegebied De Liesbosch**
**NL-3500 GA Utrecht (NL)**

(72) Inventor: **Koot, Theodorus Anicetus Joannes**
**Klaproosstraat 11**
**NL-3434 EL Nieuwegein (NL)**
Inventor: **Verpalen, Willem Adriaan**
**Polkahof 18**
**NL-3438 TM Nieuwegein (NL)**

(74) Representative: **Konings, Lucien Marie Cornelis**
**Joseph et al,**
**OCTROOIBUREAU ARNOLD & SIEDSMA**
**Sweelinckplein 1**
**NL-2517 GK Den Haag (NL)**

Courier Press, Leamington Spa, England.

# A coalescing device

The invention relates to a coalescing device suitable for separating oil-water mixtures and comprising
a holder,
a coalescer arranged in said holder and comprising a coalescing medium and a grating,
a first collecting space having a relatively low level heavier component outlet and a relatively high level lighter component outlet for discharge of the lighter and heavier components passing through the grating from the coalescing medium,
a second collecting space arranged above the coalescing medium for collecting readily separable light substances and having a feed mixture inlet,
a flushing medium inlet connecting with the first collecting space,
and a second collecting space outlet for discharge of said readily separable light substances

Such a coalescing device is known from GB—A—1,455,692. In this known device the first collecting space located beneath the coalescer is employed for the evacuation of both the coalesced substance emerging from the coalescer and the carrier fluid. It is likely that a comparatively high amount of carrier medium is conducted away through the substance outlet and a comparatively high amount of light, coalesced substance is conducted away through the carrier medium outlet. Moreover, since the separated light substance will stick to the grating, the passage of the mixture through the coalescing medium is impeded so that the substance already coalesced may be readily refined and the efficacious operation of the coalescer is deteriorated.

The invention provides a device in which the separation between the coalesced substance to be conducted away and the carrier medium is improved in that the second collecting space is within the coalescer and in that the first collecting space comprises upper and lower compartments located respectively above and below the coalescer and communicating via at least one passageway, which short-circuits the coalescer, said relatively low and relatively high level outlets being respectively within the upper and lower compartments respectively.

When a flushing medium inlet is connected through valve means with the upper compartment of the first collecting space, said upper compartment being provided with an oil sensor, then the device is particularly suitable for use as a separator in ships. A ship separator may sometimes temporarily receive a mixture consisting of a very high percentage of oil. This oil can then be directly collected in the upper compartment, sensed and conducted away. For the same reason it is also very advantageous to provide a second oil sensor in the second collecting space.

A very compact, preferred embodiment of the coalescing device according to the invention is characterized in that the holder comprises a vertical vessel and the passageway is formed by a communication tube arranged centrally in the vessel, whilst the space between the communication tube and the vessel is occupied by the coalescer.

The grating does not project laterally of the under side of the coalescing medium.

When a supply line for feed mixture and flushing medium is selectively connectable with the first collecting space or with the second collecting space through switchable valve means, the coalescing medium can be easily cleaned by back flushing.

The invention will be described more fully with reference to the drawing.

The drawing shows schematically in

Figure 1 a side elevation of a device in accordance with the invention,

Figure 2 a sectional view taken on the line II—II in Figure 1,

Figure 3 a preferred embodiment of the device in accordance with the invention substantially as shown in Figure 1 in the operational phase, and

Figure 4 the device of Figure 3 in the flushing phase.

The coalescing device 1 for coalescing a substance in a mixture of a carrier fluid and the insoluble, particulate substance contained therein comprises a holder 2, accommodating a coalescer 3 provided with a coalescing medium 4, for example, sand and communicating on the bottom side through a grating 5 carrying the coalescence medium 4 with a first collecting space 6 arranged in the holder 2 and comprising a lower compartment 7 disposed beneath the coalescer 3 and an upper compartment 8 disposed above the coalescer 3. The compartments 7 and 8 communicate with one another through an ample passage, since they are interconnected by wide tubes 9 and 10. The flow from compartment 7 towards compartment 8 or inversely does not pass through the coalescence medium 4 of the coalescer 3 so that this coalescer 3 is considered to be shortcircuited by said flow.

In the coalescer 3, above the coalescence medium 4, a second collecting space 11 is provided for readily separable, light substances. In the second collecting space 11 opens out the feed mixture inlet 12 for introducing the mixture to be coalesced. This feed inlet 12 communicates via valves 13 and 14 with a supply line 15 for feed mixture or flushing medium and an outlet 16 for dirty flushing water respectively. This second collecting space 11 has, moreover, an outlet 17 leading away therefrom for substances (such as oil), including a valve 18. A manometer 20 is connected with the second collecting space 11 for early signalisation of a rise in feed pressure so that a change-over from the operational phase shown to a flushing phase can be carried out.

With the lower compartment 7 communicates a carrier or heavier fluid outlet 24 provided with a valve 25. In the upper compartment 8 of the first collecting space 6 opens out a flushing water inlet 19. From said space leads away the lighter substance outlet 21 provided with a valve 23 at a level appreciably higher than the low-level carrier fluid outlet 24 communicating with the lower compartment 7. The flushing water inlet 19 can be connected through the closing member 22 with line 15 as shown.

In order to remove the separated oil or the oil temporarily supplied in excess sensors 26 and 27 are provided to generate signals for changing over valves 23 and 18 via control-members 28 and 29. When the feed pressure increases, the valves 25, 22, 13 and 14 can be changed over manually. Via the signal generator 31 and through the signalling lines 30 a signal may alternatively be given for an automatic change-over of these valves from the operational position W as shown to the opposite flushing position S.

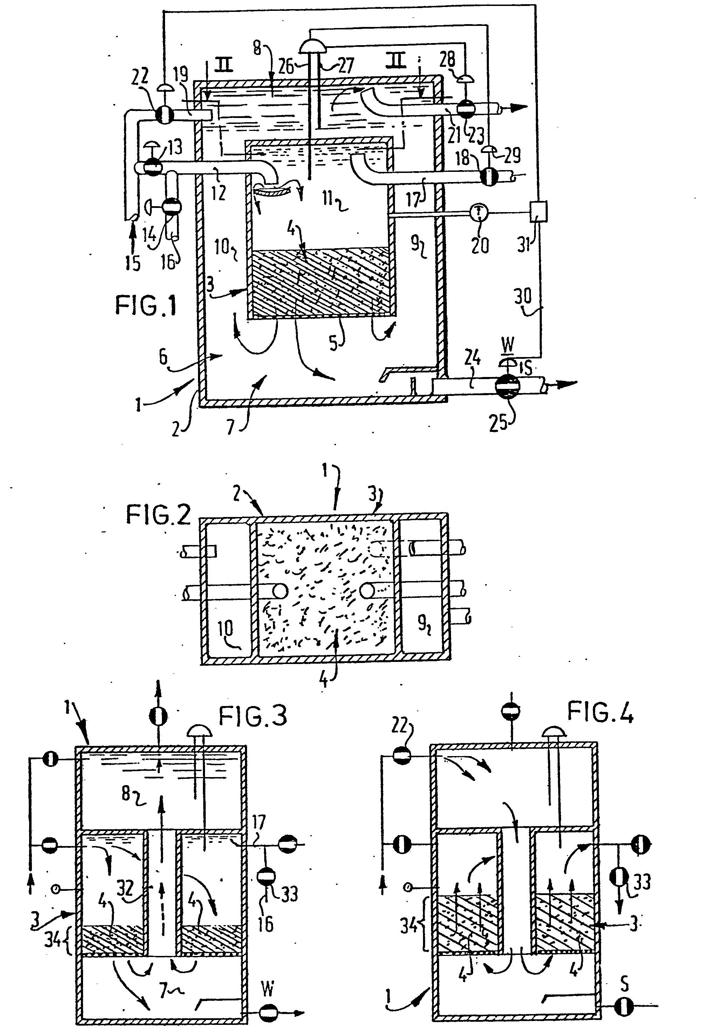

The embodiment shown in Figures 3 and 4 differs from that shown in Figures 1 and 2 in that a concentric communication tube 32 connects the upper compartment 8 with the lower compartment 7 and in that, for example, the dirty flushing water outlet 16 is coupled through a valve 33 with the lighter substance outlet 17. Figures 3 and 4 show the device in the operational phase and in the flushing phase respectively. A comparison between Figures 3 and 4 clearly shows that the volume 34 of the coalescence medium 4 is larger during the flushing phase than during the operational phase. During flushing the dirt left behind in the coalescence medium 4 during the operational phase and clogging the coalescer 3 is flushed away and fed through the valves 14 and 33 respectively to a post-purifier (not shown), for example, a plate separator or a settling tank.

## Claims

1. A coalescing device (1) suitable for separating oil-water mixtures and comprising
a holder (2),
a coalescer (3) arranged in said holder and comprising a coalescing medium (4) and a grating (5),
a first collecting space (6) having a relatively low level heavier component outlet (24) and a relatively high level lighter component outlet (21) for discharge of the lighter and heavier components passing through the grating (5) from the coalescing medium (4),
a second collecting space (11) arranged above the coalescing medium (4) for collecting readily separable light substances and having a feed mixture inlet (12),
a flushing medium inlet (19) connecting with the first collecting space (11),
and a second collecting space outlet (17) for discharge of said readily separable light substances, characterized in that said second collecting space (11) is within the coalescer (3) and that the first collecting space (6) comprises upper and lower compartments (8, 7) located respectively above and below the coalescer (3) and communicating via at least one passageway (10), which short-circuits the coalescer (3), said relatively low and relatively high level outlets (24, 21) being respectively within the upper and lower compartments (8, 7) respectively.

2. A coalescing device, characterized in that the flushing medium inlet (19) is connected through valve means (22) with the upper compartment (8) of the first collecting space (6), said upper compartment being provided with an oil sensor (27).

3. A coalescing device as claimed in claim 1, 2 or 3, characterized in that the holder (2) is a vertical vessel and the passageway (32) is formed by a communication tube arranged centrally in the vessel, whilst the space between the communication tube (33) and the vessel is occupied by the coalescer (3).

4. A coalescing device as claimed in any one of the preceding claims, characterized in that the second collecting space (11) and the first collecting space (6) each comprise an oil sensor (26 and 27) respectively.

5. A coalescing device as claimed in any one of the preceding claims, characterized in that the grating (5) does not project laterally of the under side of the coalescing medium (4).

6. A coalescing device (1) as claimed in any one of the preceding claims, characterized in that a supply line (15) for feed mixture or flushing medium is selectively connectable with the first collecting space (6) or with the second collecting space (11), via the feed mixture inlet (12) or the flushing medium inlet (19) respectively, through switchable valve means (13, 22).

## Revendications

1. Un dispositif de coalescence (1) approprié pour séparer des mélanges eau-huile et comprenant
un récipient (2),
une enceinte de coalescence (3) agencée dans ce récipient et comportant un agent agglutinant (4) et une grille (5),
un premier espace collecteur (6) ayant une sortie (24) de constituant plus lourd à un niveau relativement bas et une sortie (21) de constituant plus léger à un niveau relativement haut, pour décharger les constituants plus légers et plus lourds qui passent à travers la grille (5) en provenance de l'agent agglutinant (4),
un deuxième espace collecteur (11) ménagé au-dessus de l'agent agglutinant (4) pour collecter les substances légères facilement séparables et ayant une entrée (12) d'alimentation en mélange,

une entrée (19) d'agent de rinçage relié au premier espace collecteur (11),

et une sortie (17) du deuxième espace collecteur pour décharger les substances légères facilement séparables, caractérisé en ce que le deuxième espace collecteur (11) se trouve à l'intérieur de l'enceinte de coalescence (3) et que le premier espace collecteur (6) comprend des compartiments supérieur et inférieur (8, 7) situés respectivement au-dessus et au-dessous de l'enceinte de coalescence (3) et communiquant par au moins un passage (10) qui court-circuite cette enceinte (3), les sorties (24, 21) de niveau relativement bas et de niveau relativement élevé étant respectivement situées dans les compartiments supérieur et inférieur (8, 7) respectivement.

2. Dispositif de coalescence, caractérisé en ce que l'entrée de l'agent de rinçage (19) est reliée à travers une vanne (22) au compartiment supérieur (8) du premier espace collecteur (6), ce compartiment supérieur étant équipé d'un détecteur d'huile (27).

3. Dispositif de coalescence suivant la revendication 1, 2 ou 3, caractérisé en ce que le récipient (2) est un réservoir vertical et le passage (32) est formé par un tube de communication monté dans la partie centrale du réservoir tandis que l'espace entre le tube de communication (33) et le réservoir est occupé par l'enceinte de coalescence (3).

4. Dispositif de coalescence suivant l'une des revendications précédentes, caractérisé en ce que le deuxième espace collecteur (11) et le premier espace collecteur (6) comprennent chacun un détecteur d'huile (26 et 27) respectivement.

5. Dispositif de coalescence suivant l'une des revendications précédentes, caractérisé en ce que la grille (5) ne dépasse pas latéralement la face inférieure de l'agent agglutinant (4).

6. Dispositif de coalescence (1) suivant l'une des revendications précédentes, caractérisé en ce qu'une ligne d'alimentation (15) pour le mélange d'alimentation ou l'agent de rinçage peut être reliée sélectivement au premier espace collecteur (11), par l'intermédiaire de l'entrée d'alimentation en mélange (12) ou de l'entrée d'agent de rinçage (19) respectivement à travers des vannes commutables (13—22).

**Patentansprüche**

1. Eine Koalesziervorrichtung (1) geeignet für die Scheidung eines Oel-Wasser Gemisches und enthältend einen Behälter (2),

einen Koaleszierer (3), angeordnet im Behälter, der Koalesziermaterial (4) und ein Gitter (5) umfasst,

einen ersten Sammelraum (6), der einen relativ niedrig angeordneten schwereren Gemischkomponentenauslass (24) und einen relativ hoch angeordneten leichteren Gemischkomponentenauslass (21) hat für die Abführung der leichteren und schwereren Gemischkomponenten die aus dem Koalesziermaterial (4) durch das Gitter (5) passieren,

einen zweiten Sammelraum (11) angeordnet über dem Koalesziermaterial (4) für die Sammelung von leicht abscheidbaren leichten Stoffen, welcher Sammelraum (11) einen Eingang (12) für das zu scheidene Gemisch hat,

einen Spülmediumeingang (19) der mit dem zweiten Sammelraum (11) verbunden ist, und

einen zweiten Sammelraumauslass (17) für die Abführung von leicht abscheidbaren leichten Stoffen. dadurch gekennzeichnet, dass der zweite Sammelraum (11) im Innenraum des Koalesziers angeordnet ist und dass der erste Sammelraum obere und untere Abteilungen (8, 7) hat die oberhalb beziehungsweise unterhalb des Koalesziers (3) angeordnet sind und die über mindestens einen Durchgang (10) miteinander Kommunizieren, welcher Durchgang (10) den Koaleszierer (3) kurzschliesst, wobei die relativ hoch und niedrig angeordneten Auslässe (24, 21) in der oberen beziehungsweise unteren Abteilung (8, 7) angeordnet sind.

2. Eine Koalesziervorrichtung, dadurch gekennzeichnet, dass der Spülmediumeingang (19) mittels Ventile (22) verbunden ist mit der oberen Abteilung (8) des ersten Sammelraumes (6) welchen Sammelraum (6) ein Oeltaster (27) zugeordnet ist.

3. Eine Koalesziervorrichtung nach Anspruch 1, 2 oder 3, dadurch gekennzeichnet dass der Behälter (2) wie ein vertikales Gefäss ausgebildet ist und die Leitung (32) gebildet worden ist aus einem mittig im Gefäss angeordneten Verbindungsrohr (33) und das Gefäss weiter durch den Koaleszierer (3) besetzt ist.

4. Eine Koalesziervorrichtung nach einem der vorgehenden Ansprüche, dadurch gekennzeichnet, dass der zweite Sammelraum (11) und der erste Sammelraum (6) Oeltäster (26 bezw. 27) umfassen.

5. Eine Koalesziervorrichtung nach einem der vorgehenden Ansprüche, dadurch gekennzeichnet, dass das Gitter (5) nicht in Querrichtung vorbei die Unterseite des Koalesziermaterials (4) ausrägt.

6. Eine Koalesziervorrichtung (1) nach einem der vorgehenden Ansprüche, dadurch gekennzeichnet, dass die Zufuhrleitung (15) des Gemisches oder des Spülmediums selektiv mit dem ersten Sammelraum (6) oder mit dem zweiten Sammelraum (11) über den Zufuhreingang (12) beziehungsweise den Spülmediumeingang (19), durch schaltbare Ventilmittel (13, 12) verbundbar ist.

0 009 059

FIG.1

FIG.2

FIG.3

FIG.4